# EUROPÄISCHE PATENTSCHRIFT

(11) **EP 4 185 179 B1**
(45) Veröffentlichungstag und Bekanntmachung des Hinweises auf die Patenterteilung: **10.09.2025**
(21) Anmeldenummer: 21743395.2
(22) Anmeldetag: 06.07.2021
(51) Int. Cl.: A47L 15/42, G06F 3/01

(54) **GESCHIRRSPÜLMASCHINE UND ANORDNUNG MIT EINER GESCHIRRSPÜLMASCHINE**
DISHWASHER AND ARRANGEMENT HAVING A DISHWASHER
LAVE-VAISSELLE ET AGENCEMENT DOTÉ D'UN LAVE-VAISSELLE

(30) Priorität: 24.07.2020 DE 102020209372
(43) Veröffentlichungstag der Anmeldung: 31.05.2023
(73) Patentinhaber: BSH Hausgeräte GmbH, 81739 München (DE)
(72) Erfinder: TRITTLER, Tönnis, 89542 Herbrechtingen (DE); PAINTNER, Kai, 86465 Welden (DE); RUPP, Michael, 89438 Holzheim (DE); SINGH, Kuldeep Narayan, 89407 Dillingen a.d. Donau (DE)
(86) Internationale Anmeldenummer: PCT/EP2021/068644
(87) Internationale Veröffentlichungsnummer: WO 2022/017781

(56) Entgegenhaltungen:
- EP-A2- 1 151 717
- CN-A- 105 534 453
- CN-A- 108 720 770
- CN-A- 108 937 805
- DE-A1- 102014 115 460
- DE-A1- 102017 209 826
- DE-U1- 202012 005 255

## Beschreibung

Die vorliegende Erfindung betrifft eine Anordnung mit einer Geschirrspülmaschine und einem Dampfschutzblech.

Eine Haushalts-Geschirrspülmaschine umfasst mitunter einen durch eine Tür verschließbaren Spülbehälter mit einer Anzahl von Spülgutaufnahmen zur Aufnahme von Spülgut und eine Steuerungsvorrichtung zum Durchführen eines Spülprogramms aus einer Mehrzahl von Spülprogrammen zum Spülen von Spülgut.

Der Spülbehälter ist zumeist aus mehreren miteinander verbundenen Blechabschnitten gebildet. Der Spülbehälter kann mit Hilfe eines an diesem befestigten Rahmen versteift sein. Die Tür ist zumeist mit Hilfe an dem Rahmen befestigter Scharnierplatten verschwenkbar an dem Spülbehälter gelagert.

Das Dokument DE 10 2017 213 699 A1 beschreibt eine Haushalts-Geschirrspülmaschine, welche einen Spülbehälter, eine Spülgutaufnahme zum Aufnehmen von Spülgut und eine Hebeeinrichtung umfasst, die dazu eingerichtet ist, die Spülgutaufnahme in einer ersten Verlagerungsebene von einem innerhalb des Spülbehälters angeordneten Ausgangszustand in einen außerhalb des Spülbehälters angeordneten Endzustand oder umgekehrt zu verlagern, und die dazu eingerichtet ist, die Spülgutaufnahme in einer sich von der ersten Verlagerungsebene unterscheidenden zweiten Verlagerungsebene von einer Ausgangsposition in eine Endposition anzuheben und von der Endposition in die Ausgangsposition abzusenken.

Außerdem hat eine herkömmliche Haushalts-Geschirrspülmaschine eine Bedienblende oder ein Bedienmodul, welches vorzugsweise an der Tür der Haushalts-Geschirrspülmaschine angeordnet ist und zur Eingabe von Benutzungs-Eingaben zur Bedienung der Haushalts-Geschirrspülmaschine eingerichtet ist. Beispielsweise kann der Benutzer über seine Benutzungs-Eingaben ein Spülprogramm aus einer Mehrzahl vorbestimmter Spülprogramme auswählen.

Ferner ist bekannt, Haushalts-Geschirrspülmaschinen mittels Gesten zu steuern. Herkömmliche Lösungen hierzu sind beispielsweise aus den Dokumenten US 2017/138109 A1, DE 10 2017 218 501 A1, DE 10 2008 021 496 A1, DE 10 2015 017 191 A1, CN 107928591 A, CN 108542332A, CN 208677331 U, EP 3 502 342 A1, DE 10 2008 021 496 A1 und CN 109857251 A bekannt.

Beispielsweise aus der oben zitierten DE 10 2008 021 496 A1 ist ein kapazitiver Gesten-Sensor bekannt, dessen Elektroden an der Frontfläche der Außentür angebracht sind. Dabei kann eine Geste zum Öffnen der Tür der Geschirrspülmaschine mit der Hand erfasst werden. Wenn die Tür der Geschirrspülmaschine allerdings offen ist, dann ist dieser kapazitive Gesten-Sensor nach unten in Richtung Fußboden gerichtet und eine Bedienung dessen mit der Hand ist nicht mehr möglich.

Auch die DE10 2014 115 460 A1 offenbart ein Verfahren zum Bedienen eines Haushaltsgeräts, das einen Sensor zum Erfassen eines Nutzers des Haushaltsgeräts aufweist. Bewegt sich der Nutzer in einen ersten Erfassungsbereich, wird das Haushaltsgerät in einen betriebsbereiten Zustand versetzt. Wird die Bewegung hingegen als eine in einem vorgegebenen zweiten Erfassungsbereich erfasste Annäherungsbewegung relativ zum Haushaltsgerät erkannt, so wird unter Verwendung des Einschaltsignals ein Aktivierungssignal zum Aktivieren einer Bedienbewegungserkennungsfunktion des Haushaltsgeräts ausgegeben.

Die DE 20 2012 005 255 U1 beschäftigt sich ebenfalls mit der Gestensteuerung eines Haushaltsgerätes, wobei zwischen einer Aktivierungsgeste und einer Betätigungsgeste unterschieden wird

Auch die CN 108720770 A beschäftigt sich mit der Gestensteuerung eins Haushaltsgerätes und damit, wie der Benutzer mittels Gesten das Hausgerät anwählt und bedient.

Die CN 105534453 A offenbart einen Geschirrspüler, der einen IR-Sensor im Sockelrücksprung aufweist zum Auslösen der Türöffnung per Fuß-Geste.

Die DE 10 2017 209 826 A1 offenbart einen Haushaltsgeschirrspüler mit einem Rahmen, um die Vorderseite eines Spülbehälters, der mittels einer Tür verschlossen werden kann. Zentrierhilfen verbessern das Schließen der Tür.

Die CN 108937805 A beschreibt einen Geschirrspüler mit einem Infrarot-Annäherungssensor. Die Verwendung eines Infrarotsensors erhöht die Störunempfindlichkeit gegenüber Umgebungslicht.

Die EP 1 151 717 A2 offenbart eine Anordnung eines Haushaltsgeschirrspülers und eines Dampfschutzblechs, an welchem eine Lichtleiter angeordnet ist. Dieser sorgt dafür, dass bei geschlossener Tür das Licht einer in der Tür angeordneten Statusanzeige in Richtung des Benutzers geleitet wird.

Vor diesem Hintergrund besteht eine Aufgabe der vorliegenden Erfindung darin, den Betrieb einer Geschirrspülmaschine weiter zu verbessern.

Gemäß einem ersten Aspekt wird eine Geschirrspülmaschine vorgeschlagen, welche eine durch eine Tür verschließbaren Spülbehälter mit einer Anzahl von Spülgutaufnahmen zur Aufnahme von Spülgut und eine an dem Spülbehälter angeordnete und als Infrarotsensor oder Radarsensor ausgebildete Gesteneingabe-Einheit zum Erfassen einer Geste des Benutzers zur Bedienung der Geschirrspülmaschine aufweist.

Durch die Anordnung der als Infrarotsensor oder Radarsensor ausgebildeten Gesteneingabe-Einheit an dem Spülbehälter ist es vorteilhafterweise für den Benutzer möglich, seine Benutzereingaben durch Gesten sowohl im offenen Zustand der Tür als auch im geschossenen Zustand der Tür einzugeben, da sich der vor der Geschirrspülmaschine stehende Benutzer in beiden Zuständen im Erfassungsbereich der Gesteneingabe-Einheit befindet. Folglich kann die Gesteneingabe-Einheit Gesten eines vor der Geschirrspülmaschine stehenden Benutzers sowohl im geschlossenen Zustand der Tür als auch im geöffneten Zustand der Tür erfassen. Im geschlossenen Zustand der Tür bildet sich ein Schlitz oberhalb der Türoberkante der Tür, beispielsweise gegenüber einem montierten Dampfschutzblech, derart, dass sich im geschlossenen Zustand der Tür ein Wellenleiter für die als Infrarotsensor oder Radarsensor ausgebildete Gesteneingabe-Einheit ausbildet. Durch den Wellenleiter ist es insbesondere möglich, einen gerichteten Erfassungsbereich für die Gesteneingabe-Einheit für den vor der Geschirrspülmaschine stehenden Benutzer auszubilden.

Die Gesteneingabe-Einheit kann auch als Gestensensor oder Gestensteuerung bezeichnet werden. Der Einsatz der Gestensteuerung hat den Vorteil der Verhinderung von Verschmutzungen der Geschirrspülmaschine, insbesondere eines Bedienpanels oder von Knöpfen, durch schmutzige Hände des Benutzers. Der Einsatz von Infrarot oder Radar für den Gestensensor hat den Vorteil, dass diese Technologien keine eindeutigen Rückschlüsse auf den Benutzer zulassen, insbesondere im Gegensatz zu Eingabeeinheiten, die auf Kameras oder Spracherkennung beruhen. Damit ist die Gestensteuerung unbedenklicher hinsichtlich der Privatsphäre des Benutzers.

Der Infrarotsensor kann als passiver Infrarotsensor oder als aktiver Infrarotsensor ausgebildet sein. Der aktive Infrarotsensor weist insbesondere einen Sender sowie einen Empfänger auf.

Die von der Gesteneingabe-Einheit erfassbaren Gesten umfassen insbesondere Wischgesten (links/rechts; hoch/runter; vor/zurück). Solche Wischgesten sind ergonomisch und für den Benutzer besonders einfach zu lernen. Hierdurch ergibt sich eine hohe Sicherheit gegen Fehlbedienungen durch den Benutzer.

Die Geschirrspülmaschine ist insbesondere eine Haushalts-Geschirrspülmaschine. Der Spülbehälter weist insbesondere mehrere miteinander verbundene Blechabschnitte auf. Der Rahmen hat insbesondere die Funktion, den Spülbehälter zu versteifen.

Spülgut wird zum Spülen mit der Haushalts-Geschirrspülmaschine in der Spülkammer, insbesondere auf einer oder mehreren Spülgutaufnahmen, angeordnet. Das Spülgut umfasst insbesondere verschiedenes Geschirr, Besteck und/oder Werkzeuge, welche der Zubereitung, der Lagerung und/oder dem Verzehr von Speisen dienen. Dies sind beispielsweise Teller, Töpfe, Tassen, Messer, Gläser und dergleichen mehr.

Gemäß einer Ausführungsform weist der Spülbehälter einen Rahmen auf, wobei die Gesteneingabe-Einheit an dem Rahmen befestigt ist. Der Rahmen kann auch als Behälterrahmen bezeichnet werden.

Gemäß einer weiteren Ausführungsform weist der Rahmen zwei seitliche Schenkel und einen die beiden Schenkel verbindenden Zwischenschenkel auf, wobei die Gesteneingabe-Einheit an dem Zwischenschenkel befestigt ist.

Erfindungsgemäß ist die Gesteneingabe-Einheit derart relativ zu der Tür an dem Spülbehälter angeordnet, dass die Gesteneingabe-Einheit Gesten eines vor der Geschirrspülmaschine stehenden Benutzers im geschlossenen Zustand der Tür und im geöffneten Zustand der Tür erfassen kann.

Durch die Anordnung der Gesteneingabe-Einheit an dem Rahmen des Spülbehälters ist sichergestellt, dass der Benutzer sowohl im geschlossenen Zustand der Tür als auch im offenen Zustand der Tür seine Benutzereingaben zur Bedienung der Geschirrspülmaschine mittels Gesten tätigen kann.

Gemäß einer weiteren Ausführungsform ist die Gesteneingabe-Einheit in an einer Position an dem Spülbehälter angeordnet, welche höher als eine Türoberkante der Tür im geschlossenen Zustand der Tür ist.

Durch die Anordnung der Gesteneingabe-Einheit an dieser Position oberhalb der Türoberkante der Tür ergibt sich ein Schlitz für den Erfassungsbereich der Gesteneingabe-Einheit. Plakativ gesprochen kann die Gesteneingabe-Einheit mit ihrem Erfassungsbereich durch diesen Schlitz blicken und die Gesten des vor der Geschirrspülmaschine stehenden Benutzers erfassen. Dieser Schlitz kann auch als Spalt bezeichnet werden.

Gemäß einer weiteren Ausführungsform ist eine Steuerungsvorrichtung zum Durchführen eines Spülprogramms aus einer Mehrzahl von Spülprogrammen zum Spülen von Spülgut vorgesehen. Die Steuerungsvorrichtung ist ferner dazu eingerichtet, eine Bedienungshandlung zur Bedienung der Geschirrspülmaschine in Abhängigkeit der erfassten Geste des Benutzers auszuführen.

Die Steuerungsvorrichtung kann hardwaretechnisch und/oder auch softwaretechnisch implementiert sein. Die Steuerungsvorrichtung ist insbesondere in der Geschirrspülmaschine integriert. Alternativ kann die Steuerungsvorrichtung auch außerhalb der Geschirrspülmaschine angeordnet sein. Bei einer hardwaretechnischen Implementierung kann die Steuerungsvorrichtung zum Beispiel als Computer oder als Mikroprozessor ausgebildet sein. Bei einer softwaretechnischen Implementierung kann die Steuerungsvorrichtung als Computerprogrammprodukt, als eine Funktion, als eine Routine, als Teil eines Programmcodes oder als ausführbares Objekt ausgebildet sein.

Die Steuerungsvorrichtung ist mitunter dazu eingerichtet, ein Spülprogramm aus einer Mehrzahl von Spülprogrammen zum Spülen des Spülguts durchzuführen. Ein Spülprogramm umfasst beispielsweise verschiedene Teilprogrammschritte, wie beispielsweise ein Vorspülen, ein Reinigen, ein Klarspülen und/oder ein Trocknen. Verschiedene Spülprogramme unterscheiden sich beispielsweise in einer Reihenfolge und/oder Art der Teilprogrammschritte, sowie in verschiedenen Betriebsparametern, wie beispielsweise einer Dauer und/oder Spülflottentemperatur eines oder mehrerer Teilprogrammschritte.

Gemäß einer weiteren Ausführungsform ist die Geschirrspülmaschine dazu eingerichtet, eine Mehrzahl von unterschiedlichen Zuständen zu unterschiedlichen Zeitpunkten einzunehmen. Dabei ist die Steuerungsvorrichtung dazu eingerichtet, eine bestimmte erfasste Geste in Abhängigkeit eines aktuellen Zustands der unterschiedlichen Zustände der Geschirrspülmaschine einer bestimmten Bedienungshandlung zuzuordnen und die bestimmte Bedienungshandlung auszuführen.

Vorteilhafterweise kann hierdurch ein und dieselbe Geste kontextabhängig für verschiedene Bedienungshandlungen verwendet werden. Dies bedeutet, dass die Steuerungsvorrichtung eine bestimmte erfasste Geste zustandsabhängig unterschiedlich interpretieren kann und damit unterschiedlichen Bedienungshandlungen - je nach Zustand, und damit je nach Kontext - zuordnen kann. Diese zustandsabhängige Zuordnung von erfassten Gesten auf bestimmte Bedienungshandlungen kann auch als kontextabhängige oder kontextsensitive Zuordnung verstanden werden.

Gemäß einer weiteren Ausführungsform ist die Steuerungsvorrichtung dazu eingerichtet, eine bestimmte erfasste Geste einer ersten Bedienungshandlung zuzuordnen, wenn der aktuelle Zustand der Geschirrspülmaschine einem bestimmten ersten Zustand der unterschiedliche Zustände der Geschirrspülmaschine entspricht, und die bestimmte erfasste Geste einer zweiten Bedienungshandlung zuzuordnen, wenn der aktuelle Zustand der Geschirrspülmaschine einem bestimmten zweiten Zustand der unterschiedliche Zustände der Geschirrspülmaschine entspricht.

Wenn beispielsweise die bestimmte erfasste Geste ein Wischen nach rechts ist und der erste Zustand ein ausgewähltes, aber noch nicht gestartetes Spülprogramm bezeichnet und der zweite Zustand eine durchgelaufene Geschirrspülmaschine mit geöffneter Tür bezeichnet, so wird die Wischgeste in dem ersten Zustand beispielsweise den Start des ausgewählten Spülprogramms bedingen, wohingegen die Wischgeste in dem zweiten Zustand ein Ausfahren des Oberkorbs veranlasst.

Gemäß einer weiteren Ausführungsform ist eine Speichereinrichtung vorgesehen, welche eine zustandsabhängige Zuordnung von durch die Gesteneingabe-Einheit erfassbaren Gesten auf durch die Steuerungsvorrichtung ausführbare Bedienungshandlungen speichert. Die Speichereinrichtung weist beispielsweise einen ROM-Speicher, ein EPROM-Speicher, einen EEPROM-Speicher und/oder einen Flash-Speicher auf.

Gemäß einer weiteren Ausführungsform ist die Bedienungshandlung ausgebildet durch:
Auswählen eines bestimmten Spülprogramms der Mehrzahl von Spülprogrammen,
Starten eines bestimmten Spülprogramms der Mehrzahl von Spülprogrammen,
Auswählen und Starten eines bestimmten Spülprogramms der Mehrzahl von Spülprogrammen,
automatisches Verschwenken der Tür mittels einer Verschwenkeinrichtung, und/oder
automatisches Bewegen zumindest einer der Spülgutaufnahmen mittels einer Bewegungseinrichtung.

Gemäß einer weiteren Ausführungsform ist die Bedienungshandlung ausgebildet durch eine bestimmte Abfolge umfassend:
Auswählen eines bestimmten Spülprogramms der Mehrzahl von Spülprogrammen,
Starten eines bestimmten Spülprogramms der Mehrzahl von Spülprogrammen,
Auswählen und Starten eines bestimmten Spülprogramms der Mehrzahl von Spülprogrammen,
automatisches Verschwenken der Tür mittels einer Verschwenkeinrichtung, und/oder
automatisches Bewegen zumindest einer der Spülgutaufnahmen mittels einer Bewegungseinrichtung.

Gemäß einer weiteren Ausführungsform ist die Steuerungsvorrichtung dazu eingerichtet, eine Abfolge von Bedienungshandlungen basierend auf der erfassten Geste zu bestimmen und die Durchführung des Spülprogramms, die Verschwenkeinrichtung und/oder die Bewegungseinrichtung zur Ausführung der bestimmten Abfolge anzusteuern.

Gemäß einer weiteren Ausführungsform umfasst die Anzahl von Spülgutaufnahmen einen Unterkorb und einen Oberkorb. Dabei weist die Bewegungseinrichtung vorzugsweise eine Hebeeinrichtung auf, die dazu eingerichtet ist, den Unterkorb von einer Ausgangsposition in eine Endposition anzuheben und/oder von der Endposition in die Ausgangsposition abzusenken.

Ferner weist die Geschirrspülmaschine vorzugsweise eine Führungseinrichtung auf, mit deren Hilfe der Unterkorb von einem innerhalb des Spülbehälters angeordneten Ausgangszustand in einen außerhalb des Spülbehälters angeordneten Endzustand und umgekehrt verlagerbar ist, wobei die Hebeeinrichtung einen verschwenkbar mit dem Spülbehälter und der Führungseinrichtung verbundenen Hubhebel umfasst, der eine Führungskontur aufweist, die dazu eingerichtet ist, den Unterkorb in der Endposition, bei einem Anheben derselben von der Ausgangsposition in die Endposition und bei einem Absenken derselben von der Endposition in die Ausgangsposition in dem Endzustand zu arretieren, so dass der Unterkorb nur in der Ausgangsposition von dem Ausgangszustand in den Endzustand und umgekehrt verlagerbar ist.

Gemäß einer weiteren Ausführungsform umfasst die Bewegungseinrichtung eine Ausfahreinrichtung, die dazu eingerichtet ist, den Oberkorb von einer Ausgangsposition in eine Endposition auszufahren und/oder von der Endposition in die Ausgangsposition einzufahren. Die Ausfahreinrichtung umfasst insbesondere einen Linearantrieb.

Dabei ist es auch möglich, dass die Ausfahreinrichtung den Oberkorb nur auf eine zwischen der Ausgangsposition und der Endposition gelegene Zwischenposition ausfährt, um dem Benutzer zu ermöglichen, Spülgut in den Oberkorb einzustellen und anschließend den Oberkorb wieder einzufahren. Der Ort dieser Zwischenposition kann beim Betrieb der Geschirrspülmaschine gelernt werden oder alternativ durch den Benutzer, beispielsweise mittels einer App, vorbestimmt werden.

Gemäß einer weiteren Ausführungsform ist ein Annäherungssensor zum Detektieren einer Annäherung eines Benutzers an die Geschirrspülmaschine vorgesehen.

In Abhängigkeit einer detektierten Annäherung des Benutzers an die Geschirrspülmaschine kann die Gestensteuerung und damit die Gesteneingabe-Einheit aktiviert werden. Ohne eine solche detektierte Annäherung befindet sich die Gesteneingabe-Einheit vorzugsweise im ausgeschalteten Zustand oder im Stand-By, um Energie einzusparen.

Gemäß einer weiteren Ausführungsform ist eine Speichereinrichtung vorgesehen, welche eine Zuordnung von durch die Gesteneingabe-Einheit erfassbaren Gesten auf durch die Steuerungsvorrichtung ausführbare bestimmten Abfolgen speichert.

Gemäß einer weiteren Ausführungsform ist eine Ausgabe-Einheit vorgesehen, welche dazu eingerichtet ist, eine die von der Gesteneingabe-Einheit erfasste Gesten repräsentierende Ausgabe an den Benutzer auszugeben und/oder einen Status der Gesteneingabe-Einheit auszugeben.

Erfindungsgemäß wird eine Anordnung mit einer Geschirrspülmaschine gemäß dem ersten Aspekt oder einer der Ausführungsformen des ersten Aspekts und mit einem Dampfschutzblech vorgeschlagen. Dabei sind die Geschirrspülmaschine und das Dampfschutzblech derart zueinander angeordnet, dass ein Schlitz zwischen dem Dampfschutzblech und der Tür im geschlossenen Zustand der Tür einen Wellenleiter für die als Infrarotsensor oder Radarsensor ausgebildete Gesteneingabe-Einheit ausbildet.

Die Tür weist insbesondere eine Außentür und eine Innentür auf, welche jeweils ein Blech umfassen. Außerdem ist auf der Außentür vorzugsweise ein Möbelblatt angebracht, welches auch als Türblatt bezeichnet sein kann. Das Möbelblatt ist insbesondere derart montierbar, dass es nicht in den Schlitz hineinragt. Dies wird bei der Montage insbesondere mittels eines Abstandshalters gewährleistet. Alternativ oder zusätzlich kann hierzu auch eine bauliche Maßnahme an der Tür vorgesehen sein. Jedenfalls wird dadurch sichergestellt, dass der Erfassungsbereich der Gesteneingabe-Einheit nicht blockiert oder eingeschränkt ist.

Gemäß einem dritten Aspekt wird ein Verfahren zum Betreiben einer Geschirrspülmaschine, insbesondere Haushalts-Geschirrspülmaschine, vorgeschlagen, die einen durch eine Tür verschließbaren Spülbehälter mit einer Anzahl von Spülgutaufnahmen zur Aufnahme von Spülgut aufweist. Bei dem Verfahren wird eine Geste des Benutzers zur Bedienung der Geschirrspülmaschine mittels einer als Infrarotsensor oder Radarsensor ausgebildeten und an dem Spülbehälter angeordneten Gesteneingabe-Einheit erfasst. Anschließend wird eine Bedienungshandlung zur Bedienung der Geschirrspülmaschine in Abhängigkeit der erfassten Geste des Benutzers ausgeführt.

Die für die vorgeschlagene Geschirrspülmaschine beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische perspektivische Ansicht eines Ausführungsbeispiels einer Haushalts-Geschirrspülmaschine mit einer Gesteneingabe-Einheit;
Fig. 2 zeigt eine Explosionsansicht eines weiteren Ausführungsbeispiels einer Haushalts-Geschirrspülmaschine mit einer Gesteneingabe-Einheit;
Fig. 3 zeigt die Explosionsansicht des Ausführungsbeispiels der Haushalts-Geschirrspülmaschine nach Fig. 2 mit eingezeichnetem Erfassungsbereich der Gesteneingabe-Einheit;
Fig. 4 zeigt eine schematische perspektivische Ansicht des Ausführungsbeispiels der Haushalts-Geschirrspülmaschine nach Fig. 2;
Fig. 5 zeigt die schematische perspektivische Ansicht des Ausführungsbeispiels der Haushalts-Geschirrspülmaschine nach Fig. 4 mit eingezeichnetem Erfassungsbereich der Gesteneingabe-Einheit; und
Fig. 6 zeigt eine schematische Schnittansicht eines Ausschnitts eines Ausführungsbeispiels einer Anordnung mit einer Geschirrspülmaschine und einem Dampfschutzblech.

In den Figuren sind gleiche oder funktionsgleiche Elemente mit denselben Bezugszeichen versehen worden, sofern nichts anderes angegeben ist.

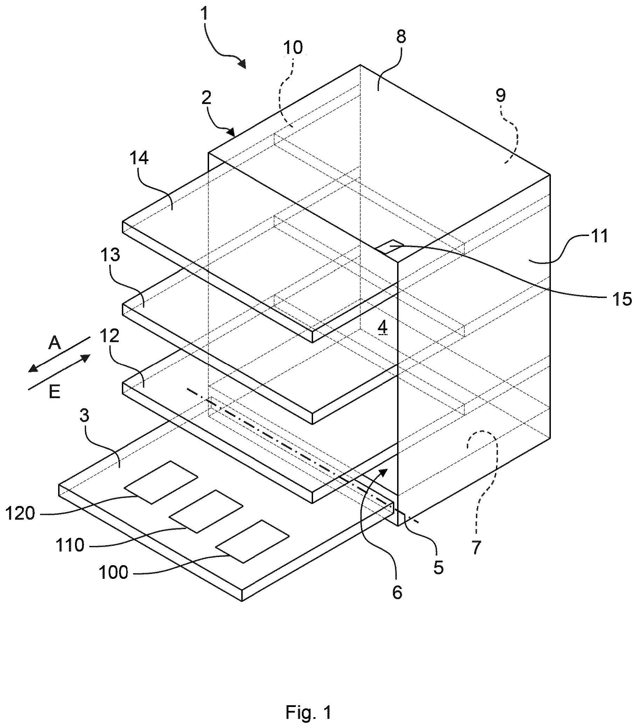

Fig. 1 zeigt eine schematische perspektivische Ansicht eines Ausführungsbeispiels einer Haushalts-Geschirrspülmaschine 1. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein (nicht dargestellt). Der Spülbehälter 2 ist vorzugsweise quaderförmig. Der Spülbehälter 2 kann in einem Gehäuse der Haushalts-Geschirrspülmaschine 1 angeordnet sein. Der Spülbehälter 2 und die Tür 3 können eine Spülkammer 4 zum Spülen von Spülgut bilden.

Die Tür 3 ist in der Fig. 1 in ihrer geöffneten Stellung dargestellt. Durch ein Verschwenken um eine an einem unteren Ende der Tür 3 vorgesehene Schwenkachse 5 kann die Tür 3 geschlossen oder geöffnet werden. Hierzu wird vorzugsweise eine Verschwenkeinrichtung zum automatischen Verschwenken der Tür 3 eingesetzt. Eine Verschwenkeinrichtung ist beispielsweise in der DE 10 2017 218 493 A1 gezeigt.

Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12, 13, 14 auf. Vorzugsweise können mehrere, beispielsweise drei, Spülgutaufnahmen 12, 13, 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12, 13, 14 übereinander in dem Spülbehälter 2 angeordnet. Jede Spülgutaufnahme 12, 13,14 ist wahlweise in den Spülbehälter 2 hinein- oder aus diesem herausverlagerbar. Insbesondere ist jede Spülgutaufnahme 12, 13, 14 in einer Einschubrichtung E in den Spülbehälter 2 hineinschiebbar und entgegen der Einschubrichtung E in einer Auszugsrichtung A aus dem Spülbehälter 2 herausziehbar.

Insbesondere umfasst die Haushalts-Geschirrspülmaschine 1 eine Bewegungseinrichtung zum automatischen Bewegen zumindest einer der Spülgutaufnahmen 12, 13, 14. Beispielsweise umfasst die Bewegungseinrichtung eine Ausfahreinrichtung, die dazu eingerichtet ist, den Oberkorb 13 von einer Ausgangsposition in eine Endposition auszufahren und/oder von der Endposition in die Ausgangsposition einzufahren. Dabei ist es auch möglich, dass die Ausfahreinrichtung den Oberkorb 13 von der Ausgangsposition nur auf eine zwischen der Ausgangsposition und der Endposition gelegene Zwischenposition ausfährt, um dem Benutzer zu ermöglichen, Spülgut in den Oberkorb 13 einzustellen und anschließend den Oberkorb 13 wieder von der Zwischenposition in die Ausgangsposition einzufahren.

Alternativ oder zusätzlich kann die Bewegungseinrichtung auch eine Hebeeinrichtung aufweisen. Die Hebeeinrichtung ist dazu eingerichtet, den Unterkorb 12 von einer Ausgangsposition in eine Endposition anzuheben, in der der Benutzer bequem Spülgut in den angehobenen Unterkorb 12 einräumen kann oder ausräumen kann, und/oder von der Endposition in die Ausgangsposition abzusenken.

Die Haushalts-Geschirrspülmaschine 1 weist zudem eine Steuerungsvorrichtung 100, eine Speichereinrichtung 110 und eine Ausgabe-Einheit 120 auf, welche beispielsweise an der Tür 3 angeordnet sind. Die Speichereinrichtung 110 umfasst beispielsweise einen ROM-Speicher, einen EPROM-Speicher, einen EEPROM-Speicher und/oder einen Flash-Speicher.

Die Steuerungsvorrichtung 100 ist dazu eingerichtet, ein Spülprogramm aus einer Mehrzahl von Spülprogrammen zum Spülen von Spülgut in dem Spülbehälter 2 auszuführen.

Ferner ist an dem Spülbehälter 2 eine Gesteneingabe-Einheit 15 zum Erfassen von Gesten des Benutzers zur Bedienung der Geschirrspülmaschine 1 vorgesehen. In dem Beispiel der Fig. 1 ist die Gesteneingabe-Einheit 15 im Bereich der Decke 8 des Spülbehälters 2 angeordnet. In Abhängigkeit der von der Gesteneingabe-Einheit 15 erfassten Geste des Benutzers führt die Steuerungsvorrichtung 100 eine Bedienungshandlung zur Bedienung der Haushalts-Geschirrspülmaschine 1 aus. Beispiele für eine solche Bedienungshandlung umfassen das Auswählen eines bestimmten Spülprogramms, das Starten eines bestimmten Spülprogramms, das Auswählen und Starten eines bestimmten Spülprogramms, das automatische Verschwenken der Tür 3 mittels der Verschwenkeinrichtung und das automatische Bewegen zumindest einer der Spülgutaufnahmen 12, 13, 14 mittels der Bewegungseinrichtung.

Dabei ist die Gesteneingabe-Einheit 15 derart relativ zu der Tür 3 an dem Spülbehälter 2 angeordnet, dass die Gesteneingabe-Einheit 15 die Gesten eines vor der Haushalts-Geschirrspülmaschine 1 stehenden Benutzers sowohl im geschlossenen Zustand der Tür 3 als auch im geöffneten Zustand der Tür 3 erfassen kann.

Des Weiteren ist die Haushalts-Geschirrspülmaschine 1 dazu eingerichtet, eine Mehrzahl von unterschiedlichen Zuständen zu unterschiedlichen Zeitpunkten einzunehmen. Zur internen Speicherung und Verwaltung der Mehrzahl von unterschiedlichen Zuständen kann ein Zustandsautomat eingesetzt werden, der insbesondere als Teil der Steuerungsvorrichtung 100 implementiert sein kann.

Hierbei ist die Steuerungsvorrichtung 100 insbesondere dazu eingerichtet, eine bestimmte erfasste Geste in Abhängigkeit eines aktuellen Zustands der unterschiedlichen Zustände der Haushalts-Geschirrspülmaschine 1 einer bestimmten Bedienungshandlung zuzuordnen und die bestimmte Bedienungshandlung auszuführen. Das bedeutet, dass die Steuerungsvorrichtung 100 eine bestimmte erfasste Geste zustandsabhängig unterschiedlich interpretieren kann und damit unterschiedlichen Bedienungshandlungen - je nach Zustand - zuordnen kann. Diese zustandsabhängige Zuordnung von erfassten Gesten auf bestimmte Bedienungshandlungen kann auch als kontextabhängige oder kontextsensitive Zuordnung verstanden werden. Die bestimmte Geste ist beispielsweise eine Wischgeste nach rechts oder eine Wischgeste nach links.

Hierbei ist die Steuerungsvorrichtung 100 vorzugsweise auch dazu eingerichtet, eine bestimmte erste Geste, beispielsweise ein Wischen nach rechts, einer ersten Bedienungshandlung zuzuordnen, wenn der aktuelle Zustand der Geschirrspülmaschine einem bestimmten ersten Zustand der unterschiedlichen Zustände der Geschirrspülmaschine 1 entspricht, und die bestimmte erste Geste einer zweiten Bedienungshandlung zuzuordnen, wenn der aktuelle Zustand der Geschirrspülmaschine 1 einem bestimmten zweiten Zustand der unterschiedlichen Zustände der Geschirrspülmaschine 1 entspricht.

Wenn beispielsweise die bestimmte Geste ein Wischen nach rechts ist und der erste Zustand der Geschirrspülmaschine 1 ein ausgewähltes, aber noch nicht gestartetes Spülprogramm bezeichnet, und der zweite Zustand der Geschirrspülmaschine eine durchgelaufene Geschirrspülmaschine 1 mit geöffneter Tür 3 bezeichnet, so wird die Wischgeste in dem ersten Zustand beispielsweise den Start des ausgewählten Spülprogramms auslösen, wohingegen die Wischgeste in dem zweiten Zustand ein Ausfahren des Oberkorbs 13 auslöst.

Hierbei ist vorzugsweise vorgesehen, dass die Speichereinrichtung 100 diese zustandsabhängige Zuordnung von durch die Gesteneingabe-Einheit 15 erfassbaren Gesten auf durch die Steuerungsvorrichtung 100 ausführbare Bedienungshandlungen speichert.

Des Weiteren kann vorgesehen sein, dass eine bestimmte Geste nicht nur eine einzelne Bedienungshandlung triggert, sondern eine bestimmte Abfolge umfassend eine Mehrzahl von Bedienungshandlungen. Beispielsweise kann eine solche Abfolge ein Öffnen der Tür 3, ein anschließendes Ausfahren und gegebenenfalls Anheben des Unterkorbs 12 und ein darauffolgendes - gegebenenfalls zeitlich verzögertes - Ausfahren des Oberkorbs 13 umfassen.

Dabei ist die Steuerungsvorrichtung 100 vorzugsweise dazu eingerichtet, eine Abfolge basierend auf der erfassten Geste zu bestimmen und die Durchführung des Spülprogramms, die Ansteuerung der Verschwenkeinrichtung und/oder die Ansteuerung der Bewegungseinrichtung zur Ausführung der bestimmten Abfolge auszuführen.

Hierbei kann die Speichereinrichtung 110 auch dazu eingerichtet sein, eine Zuordnung von durch die Gesteneingabe-Einheit 15 erfassbaren Gesten auf durch die Steuerungsvorrichtung 100 ausführbare bestimmte Abfolgen zu speichern.

Die in Fig. 1 gezeigte Ausgabe-Einheit 120 ist dazu eingerichtet, eine die von der Gesteneingabe-Einheit 15 erfasste Geste repräsentierende Ausgabe an den Benutzer auszugeben. Auch diese Ausgabe ist vorzugsweise zustandsabhängig bzw. kontextabhängig. Beispielsweise umfasst die Ausgabe-Einheit 120 einen Bildschirm oder Touchscreen, auf dem ein Icon ausgebbar ist, welches die erfasste Geste repräsentiert. Alternativ oder zusätzlich kann die Ausgabe-Einheit 120 auch dazu eingerichtet sein, einen Status der Gesteneingabe-Einheit 15 auszugeben. Beispielsweise kann der Status einen eingeschalteten Zustand oder einen ausgeschalteten Zustand der Gestenerkennung und damit der Gesteneingabe-Einheit 15 angeben.

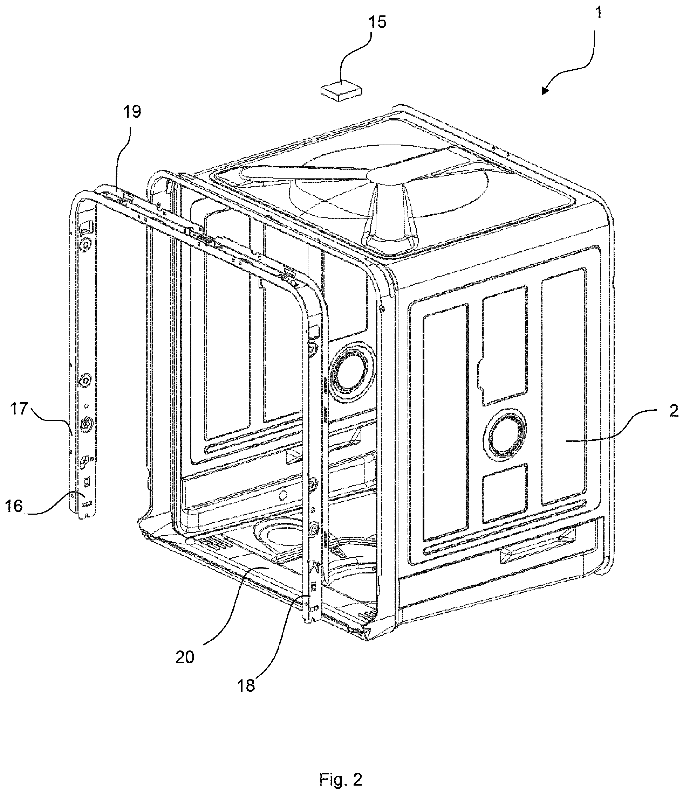

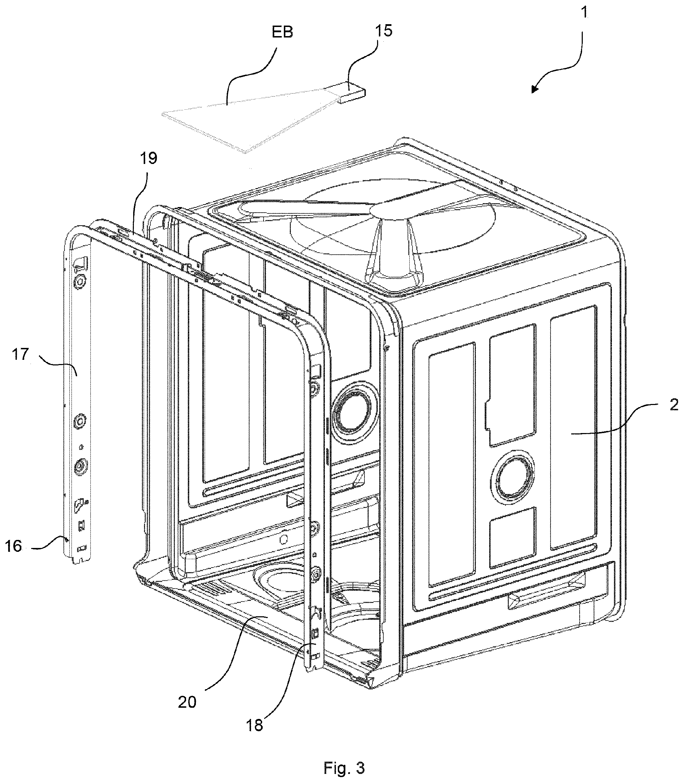

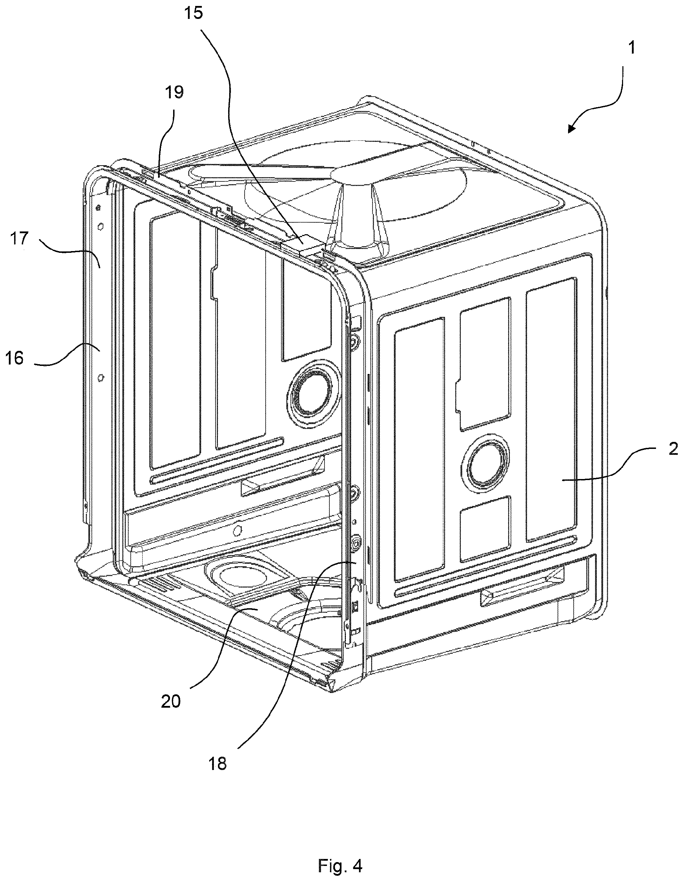

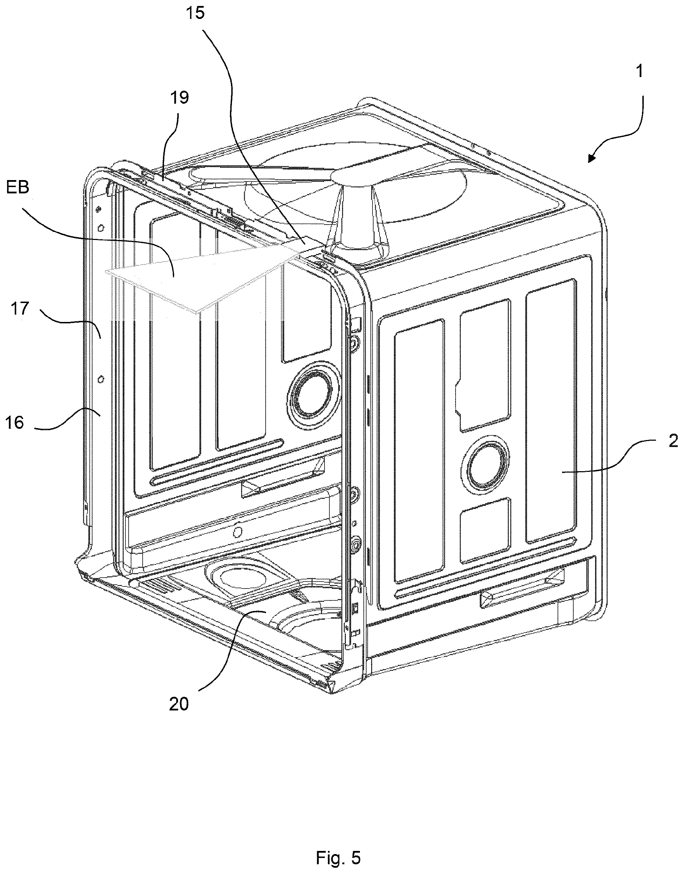

Fig. 2 zeigt eine Explosionsansicht eines weiteren Ausführungsbeispiels einer Haushalts-Geschirrspülmaschine 1 mit einer Gesteneingabe-Einheit 15. Hierzu zeigt die Fig. 3 das Ausführungsbeispiel der Fig. 2, wobei der Erfassungsbereich EB der Gesteneingabe-Einheit 15 eingezeichnet ist. Ferner zeigt hierzu die Fig. 4 eine schematische perspektivische Ansicht des Ausführungsbeispiels der Haushalts-Geschirrspülmaschine nach Fig. 2 und die Fig. 5 zeigt die Ansicht der Fig. 4 mit eingezeichnetem Erfassungsbereich EB der Gesteneingabe-Einheit 15.

Mit Bezug zu den Fig. 2 bis 5 hat der Spülbehälter 2 einen Rahmen 16, der insbesondere zur Versteifung des Spülbehälters 2 dient. Der Rahmen 16 ist insbesondere an dem Bodenblech 20 des Spülbehälters 2 anordenbar. Bei dem Ausführungsbeispiel nach den Fig. 2 bis 5 ist die Gesteneingabe-Einheit 15 an dem Rahmen 16 befestigt.

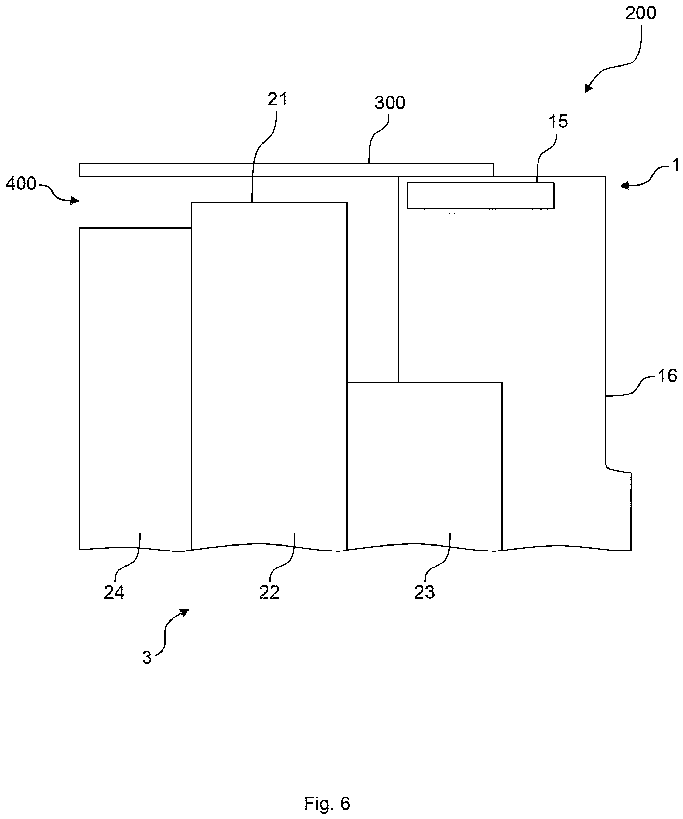

Der Rahmen 16 hat zwei seitliche Schenkel 17, 18 und einen die beiden Schenkel 17, 18 verbindenden Zwischenschenkel 19, an dem die Gesteneingabe-Einheit 15 vorzugsweise befestigt ist. Dabei ist die Gesteneingabe-Einheit 15 insbesondere an einer Position an dem Spülbehälter 2 angeordnet, welche höher als eine Türoberkante 21 (siehe hierzu Fig. 6) der Tür 3 im geschlossenen Zustand der Tür 3 ist.

Des Weiteren zeigt Fig. 6 eine schematische Schnittansicht eines Ausschnitts eines Ausführungsbeispiels einer Anordnung mit 200 einer Geschirrspülmaschine 1 und einem Dampfschutzblech 300. Die Geschirrspülmaschine 1 ist beispielsweise eine Haushalts-Geschirrspülmaschine 1 und gemäß einem der Ausführungsbeispiele nach den Fig. 1 bis 5 ausgebildet.

Die Tür 3 nach Fig. 6 hat eine Außentür 22 und eine Innentür 23, welche beispielsweise jeweils ein Blech umfassen. Außerdem hat die Tür 3 nach Fig. 6 ein auf der Außentür 22 angebrachtes Türblatt 24, welches auch als Möbelblatt bezeichnet werden kann.

Die Gesteneingabe-Einheit 15 der Geschirrspülmaschine 1 ist in der Fig. 6 an dem Rahmen 16 befestigt. Dabei illustriert die Fig. 6, dass die Gesteneingabe-Einheit 15 an einer Position an dem Rahmen 16 angeordnet ist, welche höher als die Türoberkante 21 der Tür 3 im geschlossenen Zustand der Tür 3 ist.

Wie in Fig. 6 gezeigt, sind die Geschirrspülmaschine 1 und das Dampfschutzblech 300 derart zueinander angeordnet, dass ein Schlitz 400 zwischen dem Dampfschutzblech 300 und der Tür 3 im geschlossenen Zustand der Tür 3 einen Wellenleiter für die als Infrarotsensor oder Radarsensor ausgebildete Gesteneingabe-Einheit 15 bildet.

Obwohl die vorliegende Erfindung anhand von Ausführungsbeispielen beschrieben wurde, ist sie vielfältig modifizierbar.

### Verwendete Bezugszeichen:

- 1: Haushalts-Geschirrspülmaschine
- 2: Spülbehälter
- 3: Tür
- 4: Spülkammer
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Gesteneingabe-Einheit
- 16: Rahmen
- 17: Schenkel
- 18: Schenkel
- 19: Zwischenschenkel
- 20: Bodenblech
- 21: Türoberkante
- 22: Außentür
- 23: Innentür
- 24: Türblatt
- 100: Steuerungsvorrichtung
- 110: Speichereinrichtung
- 120: Ausgabe-Einheit
- 200: Anordnung
- 300: Dampfschutzblech
- 400: Schlitz

- A: Auszugsrichtung
- E: Einschubrichtung
- EB: Erfassungsbereich

## Patentansprüche

1. Anordnung (200) mit einer Geschirrspülmaschine (1), insbesondere Haushalts-Geschirrspülmaschine, aufweisend eine durch eine Tür (3) verschließbaren Spülbehälter (2) mit einer Anzahl von Spülgutaufnahmen (12, 13, 14) zur Aufnahme von Spülgut, und eine an dem Spülbehälter (2) angeordnete und als Infrarotsensor oder Radarsensor ausgebildete Gesteneingabe-Einheit (15) zum Erfassen einer Geste des Benutzers zur Bedienung der Geschirrspülmaschine (1), wobei die Gesteneingabe-Einheit (15) derart relativ zu der Tür (3) an dem Spülbehälter (2) angeordnet ist, dass die Gesteneingabe-Einheit (15) Gesten eines vor der Geschirrspülmaschine (1) stehenden Benutzers im geschlossenen Zustand der Tür (3) und im geöffneten Zustand der Tür (3) erfassen kann, **dadurch gekennzeichnet dass** die Anordnung weiterhin ein Dampfschutzblech (300) umfasst und dass die Geschirrspülmaschine (1) und das Dampfschutzblech (300) derart zueinander angeordnet sind, dass ein Schlitz (400) zwischen dem Dampfschutzblech (300) und der Tür (3) im geschlossenen Zustand der Tür (3) einen Wellenleiter für die als Infrarotsensor oder Radarsensor ausgebildete Gesteneingabe-Einheit (15) ausbildet.

2. Anordnung (200) nach Anspruch 1, **dadurch gekennzeichnet, dass** der Spülbehälter (2) einen Rahmen (16) aufweist, wobei die Gesteneingabe-Einheit (15) an dem Rahmen (16) befestigt ist.

3. Anordnung (200) nach Anspruch 2, **dadurch gekennzeichnet, dass** der Rahmen (16) zwei seitliche Schenkel (17, 18) und einen die beiden Schenkel (17, 18) verbindenden Zwischenschenkel (19) aufweist, wobei die Gesteneingabe-Einheit (15) an dem Zwischenschenkel (19) befestigt ist.

4. Anordnung (200) nach einem der Ansprüche 1 bis 3, **dadurch gekennzeichnet, dass** die Gesteneingabe-Einheit (15) an einer Position an dem Spülbehälter (2) angeordnet ist, welche höher als eine Türoberkante (21) der Tür (3) im geschlossenen Zustand der Tür (3) ist.

5. Anordnung (200) nach einem der Ansprüche 1 bis 4, **dadurch gekennzeichnet, dass** eine Steuerungsvorrichtung (100) zum Durchführen eines Spülprogramms aus einer Mehrzahl von Spülprogrammen zum Spülen von Spülgut vorgesehen ist, welche weiter dazu eingerichtet ist, eine Bedienungshandlung zur Bedienung der Geschirrspülmaschine (1) in Abhängigkeit der erfassten Geste des Benutzers auszuführen.

6. Anordnung (200) nach Anspruch 5, **dadurch gekennzeichnet, dass** die Geschirrspülmaschine (1) dazu eingerichtet ist, eine Mehrzahl von unterschiedlichen Zuständen zu unterschiedlichen Zeitpunkten einzunehmen, wobei die Steuerungsvorrichtung (100) dazu eingerichtet ist, eine bestimmte erfasste Geste in Abhängigkeit eines aktuellen Zustands der unterschiedlichen Zustände der Geschirrspülmaschine (1) einer bestimmten Bedienungshandlung zuzuordnen und die bestimmte Bedienungshandlung auszuführen.

7. Anordnung (200) nach Anspruch 6, **dadurch gekennzeichnet, dass** die Steuerungsvorrichtung (100) dazu eingerichtet ist, eine bestimmte erfasste Geste einer ersten Bedienungshandlung zuzuordnen, wenn der aktuelle Zustand der Geschirrspülmaschine einem bestimmten ersten Zustand der unterschiedliche Zustände der Geschirrspülmaschine (1) entspricht, und die bestimmte erfasste Geste einer zweiten Bedienungshandlung zuzuordnen, wenn der aktuelle Zustand der Geschirrspülmaschine (1) einem bestimmten zweiten Zustand der unterschiedliche Zustände der Geschirrspülmaschine (1) entspricht.

8. Anordnung (200) nach Anspruch 6 oder 7, **dadurch gekennzeichnet, dass** eine Speichereinrichtung (110) vorgesehen ist, welche eine zustandsabhängige Zuordnung von durch die Gesteneingabe-Einheit (15) erfassbaren Gesten auf durch die Steuerungsvorrichtung (100) ausführbare Bedienungshandlungen speichert.

9. Anordnung (200) nach einem der Ansprüche 5 bis 8, **dadurch gekennzeichnet, dass** die Bedienungshandlung ausgebildet ist durch:
Auswählen eines bestimmten Spülprogramms der Mehrzahl von Spülprogrammen,
Starten eines bestimmten Spülprogramms der Mehrzahl von Spülprogrammen,
Auswählen und Starten eines bestimmten Spülprogramms der Mehrzahl von Spülprogrammen,
automatisches Verschwenken der Tür (3) mittels einer Verschwenkeinrichtung, und/oder
automatisches Bewegen zumindest einer der Spülgutaufnahmen (12, 13, 14) mittels einer Bewegungseinrichtung.

10. Anordnung (200) nach einem der Ansprüche 5 bis 8, **dadurch gekennzeichnet, dass** die Bedienungshandlung ausgebildet ist durch eine bestimmte Abfolge umfassend:
Auswählen eines bestimmten Spülprogramms der Mehrzahl von Spülprogrammen,
Starten eines bestimmten Spülprogramms der Mehrzahl von Spülprogrammen,
Auswählen und Starten eines bestimmten Spülprogramms der Mehrzahl von Spülprogrammen,
automatisches Verschwenken der Tür (3) mittels einer Verschwenkeinrichtung, und/oder
automatisches Bewegen zumindest einer der Spülgutaufnahmen (12, 13, 14) mittels einer Bewegungseinrichtung.

11. Anordnung (200) nach Anspruch 10, **dadurch gekennzeichnet, dass** die Steuerungsvorrichtung (100) dazu eingerichtet ist, eine Abfolge basierend auf der erfassten Geste zu bestimmen und die Durchführung des Spülprogramms, die Verschwenkeinrichtung und/oder die Bewegungseinrichtung zur Ausführung der bestimmten Abfolge anzusteuern.

12. Anordnung (200) nach Anspruch 10 oder 11, **dadurch gekennzeichnet, dass**, sofern Anspruch 10 oder Anspruch 11 von Anspruch 8 abhängig ist, die Speichereinrichtung (110) vorgesehen ist, bzw., sofern Anspruch 10 oder Anspruch 11 von einem der Ansprüche 5 bis 7 abhängig ist, eine Speichereinrichtung (110) vorgesehen ist, welche eine Zuordnung von durch die Gesteneingabe-Einheit (15) erfassbaren Gesten auf durch die Steuerungsvorrichtung (100) ausführbare bestimmte Abfolgen speichert.

13. Anordnung (200) nach einem der Ansprüche 1 bis 12, **dadurch gekennzeichnet, dass** eine Ausgabe-Einheit (120) vorgesehen ist, welche dazu eingerichtet ist, eine die von der Gesteneingabe-Einheit (15) erfasste Geste repräsentierende Ausgabe an den Benutzer auszugeben und/oder einen Status der Gesteneingabe-Einheit (15) auszugeben.

## Claims

1. Arrangement (200) with a dishwasher (1), in particular household dishwasher, having a dishwasher cavity (2) which can be closed off by a door (3) with a number of receptacles for items to be washed (12, 13, 14) for receiving items to be washed, and a gesture input unit (15), which is arranged on the dishwasher cavity (2) and is embodied as an infrared sensor or radar sensor, for capturing a gesture of the user for operator control of the dishwasher (1), wherein the gesture input unit (15) is arranged relative to the door (3) on the dishwasher cavity (2) in such a manner that the gesture input unit (15) is able to capture gestures of a user standing in front of the dishwasher (1) when the door (3) is in the closed state and when the door (3) is in the open state, **characterised in that** the arrangement furthermore comprises a vapour protection plate (300) and that the dishwasher (1) and the vapour protection plate (300) are arranged in relation to each other in such a manner that a slot (400) forms a waveguide for the gesture input unit (15), which is embodied as an infrared sensor or radar sensor, between the vapour protection plate (300) and the door (3) when the door (3) is in the closed state.

2. Arrangement (200) according to claim 1, **characterised in that** the dishwasher cavity (2) has a frame (16), wherein the gesture input unit (15) is fastened to the frame (16).

3. Arrangement (200) according to claim 2, **characterised in that** the frame (16) has two lateral limbs (17, 18) and an intermediate limb (19) which connects the two limbs (17, 18), wherein the gesture input unit (15) is fastened to the intermediate limb (19).

4. Arrangement (200) according to one of claims 1 to 3, **characterised in that** the gesture input unit (15) is arranged at a position on the dishwasher cavity (2) which is higher than a door upper edge (21) of the door (3) when the door (3) is in the closed state.

5. Arrangement (200) according to one of claims 1 to 4, **characterised in that** a control apparatus (100) for performing a washing program from a plurality of wash programs for washing items to be washed is provided, which is further configured to carry out an operator control action for operator control of the dishwasher (1) as a function of the captured gesture of the user.

6. Arrangement (200) according to claim 5, **characterised in that** the dishwasher (1) is configured to assume a plurality of different states at different points in time, wherein the control apparatus (100) is configured to assign a particular captured gesture to a particular operator control action as a function of a current state of the different states of the dishwasher (1), and to carry out the particular operator control action.

7. Arrangement (200) according to claim 6, **characterised in that** the control apparatus (100) is configured to assign a particular captured gesture to a first operator control action, if the current state of the dishwasher corresponds to a particular first state of the different states of the dishwasher (1), and to assign the particular captured gesture to a second operator control action, if the current state of the dishwasher (1) corresponds to a particular second state of the different states of the dishwasher (1).

8. Arrangement (200) according to claim 6 or 7, **characterised in that** a storage facility (110) is provided, which stores a state-dependent assignment of gestures that can be captured by the gesture input unit (15) to operator control actions that can be carried out by the control apparatus (100).

9. Arrangement (200) according to one of claims 5 to 8, **characterised in that** the operator control action is embodied by:
selecting a particular wash program of the plurality of wash programs,
starting a particular wash program of the plurality of wash programs,
selecting and starting a particular wash program of the plurality of wash programs,
automatically tilting the door (3) by means of a tilt facility, and/or
automatically moving at least one of the receptacles for items to be washed (12, 13, 14) by means of a movement facility.

10. Arrangement (200) according to one of claims 5 to 8, **characterised in that** the operator control action is embodied by a particular sequence comprising:
selecting a particular wash program of the plurality of wash programs,
starting a particular wash program of the plurality of wash programs,
selecting and starting a particular wash program of the plurality of wash programs,
automatically tilting the door (3) by means of a tilt facility, and/or
automatically moving at least one of the receptacles for items to be washed (12, 13, 14) by means of a movement facility.

11. Arrangement (200) according to claim 10, **characterised in that** the control apparatus (100) is configured to determine a sequence based on the captured gesture and to actuate the performance of the wash program, the tilt facility and/or the movement facility to carry out the particular sequence.

12. Arrangement (200) according to claim 10 or 11, **characterised in that**, if claim 10 or claim 11 is dependent upon claim 8, the storage facility (110) is provided, or if claim 10 or claim 11 is dependent upon one of claims 5 to 7, a storage facility (110) is provided, which stores an assignment of gestures that can be captured by the gesture input unit (15) to sequences that can be carried out by the control apparatus (100).

13. Arrangement (200) according to one of claims 1 to 12, **characterised in that** an output unit (120) is provided, which is configured to output an output, which represents a gesture captured by the gesture input unit (15), to the user and/or to output a status of the gesture input unit (15).

## Revendications

1. Agencement (200) comprenant un lave-vaisselle (1), en particulier un lave-vaisselle ménager, comprenant une cuve de lavage (2) pouvant être fermée par une porte (3) qui comprend un certain nombre de réceptacles d'articles à laver (12, 13, 14) pour recevoir des articles à laver, et une unité d'entrée de geste (15) disposée au niveau de la cuve de lavage (2) et configurée sous forme d'un capteur infrarouge ou d'un capteur radar pour la détection d'un geste de l'utilisateur pour commander le lave-vaisselle (1),
dans lequel l'unité d'entrée de geste (15) est disposée au niveau de la cuve de lavage (2) par rapport à la porte (3) de telle sorte que l'unité d'entrée de geste (15) peut détecter des gestes d'un utilisateur se trouvant devant le lave-vaisselle (1) à l'état fermé de la porte (3) et à l'état ouvert de la porte (3),
**caractérisé en ce que** l'agencement comprend en outre une tôle de protection anti-vapeurs (300) et **en ce que** le lave-vaisselle (1) et la tôle de protection anti- vapeurs (300) sont disposés de telle manière l'un par rapport à l'autre qu'une fente (400) entre la tôle de protection anti-vapeurs (300) et la porte (3) forme, à l'état fermé de la porte (3), un guide d'ondes pour l'unité d'entrée de geste (15) réalisée sous forme d'un capteur infrarouge ou d'un capteur radar.

2. Agencement (200) selon la revendication 1, **caractérisé en ce que** la cuve de lavage (2) comprend un cadre (16), dans lequel l'unité d'entrée de geste (15) est fixée au cadre (16).

3. Agencement (200) selon la revendication 2, **caractérisé en ce que** le cadre (16) comprend deux montants latéraux (17, 18), et un montant intermédiaire (19) reliant les deux montants (17, 18), dans lequel l'unité d'entrée de geste (15) est fixée sur le montant intermédiaire (19).

4. Agencement (200) selon l'une des revendications 1 à 3, **caractérisé en ce que** l'unité d'entrée de geste (15) est disposée à une position sur la cuve de lavage (2), qui est plus haute qu'un bord supérieur de porte (21) de la porte (3) à l'état fermé de la porte (3).

5. Agencement (200) selon l'une des revendications 1 à 4, **caractérisé en ce qu'**un dispositif de commande (100) pour exécuter un programme de lavage d'une pluralité de programmes de lavage pour laver des articles à laver est fourni, lequel est configuré en outre pour exécuter une action de commande pour commander le lave-vaisselle (1) en fonction du geste détecté de l'utilisateur.

6. Agencement (200) selon la revendication 5, **caractérisé en ce que** le lave-vaisselle (1) est configuré pour adopter une pluralité d'états différents à des moments différents, dans lequel le dispositif de commande (100) est configuré pour associer un geste particulier détecté, en fonction d'un état actuel des différents états du lave-vaisselle (1), à une action de commande spécifique et exécuter l'action de commande spécifique.

7. Agencement (200) selon la revendication 6, **caractérisé en ce que** le dispositif de commande (100) est configuré pour associer un geste particulier détecté à une première action de commande, lorsque l'état actuel du lave-vaisselle correspond à un premier état particulier des différents états du lave-vaisselle (1), et associer le geste particulier détecté à une deuxième action de commande lorsque l'état actuel du lave-vaisselle (1) correspond à un deuxième état particulier des différents états du lave-vaisselle (1).

8. Agencement (200) selon la revendication 6 ou 7, **caractérisé en ce qu'**un dispositif de mémoire (110) est prévu, lequel enregistre une association, en fonction de l'état, des gestes détectables par l'unité d'entrée de geste (15) à des actions de commande exécutables par le dispositif de commande (100).

9. Agencement (200) selon l'une des revendications 5 à 8, **caractérisé en ce que** l'action de commande est formée par :
une sélection d'un programme de lavage particulier de la pluralité des programmes de lavage,
un démarrage d'un programme de lavage particulier de la pluralité des programmes de lavage,
la sélection et le démarrage d'un programme de lavage particulier de la pluralité des programmes de lavage,
le pivotement automatique de la porte (3) au moyen d'un dispositif de pivotement, et/ou
le déplacement automatique d'au moins un des réceptacles d'articles à laver (12, 13, 14) au moyen d'un dispositif de déplacement.

10. Agencement (200) selon l'une des revendications 5 à 8, **caractérisé en ce que** l'action de commande est formée par une séquence spécifique comprenant :
une sélection d'un programme de lavage particulier de la pluralité des programmes de lavage,
le démarrage d'un programme de lavage particulier de la pluralité des programmes de lavage,
la sélection et le démarrage d'un programme de lavage particulier de la pluralité des programmes de lavage,
le pivotement automatique de la porte (3) au moyen d'un dispositif de pivotement, et/ou
le déplacement automatique d'au moins un des réceptacles d'articles à laver (12, 13, 14) au moyen d'un dispositif de déplacement.

11. Agencement (200) selon la revendication 10, **caractérisé en ce que** le dispositif de commande (100) est configuré pour déterminer une séquence sur la base du geste détecté et pour piloter l'exécution du programme de lavage, le dispositif de pivotement et/ou le dispositif de déplacement pour exécuter la séquence spécifique.

12. Agencement (200) selon la revendication 10 ou 11, **caractérisé en ce que**, lorsque la revendication 10 ou 11 dépend de la revendication 8, le dispositif de mémoire (110) est fourni, ou, lorsque la revendication 10 ou 11 dépend d'une des revendications 5 à 7, un dispositif de mémoire (110) est fourni, qui enregistre une association de gestes détectables par l'unité d'entrée de geste (15) avec des séquences spécifiques exécutables par le dispositif de commande (100).

13. Agencement (200) selon l'une des revendications 1 à 12, **caractérisé en ce qu'**une unité de sortie (120) est fournie, laquelle est configurée pour délivrer une sortie représentant le geste détecté par l'unité d'entrée de geste (15) à l'utilisateur et/ou délivrer un état de l'unité d'entrée de geste (15).
